# EUROPÄISCHE PATENTSCHRIFT

(11) **EP 1 963 449 B1**
(45) Veröffentlichungstag und Bekanntmachung des Hinweises auf die Patenterteilung: **27.07.2016**
(21) Anmeldenummer: 06829586.4
(22) Anmeldetag: 13.12.2006
(51) Int. Cl.: C09D 175/04

(54) **WÄSSRIGER BESCHICHTUNGSSTOFF, VERFAHREN ZU SEINER HERSTELLUNG UND SEINE VERWENDUNG**
AQUEOUS COATING MATERIAL, METHOD FOR THE PRODUCTION THEREOF, AND USE THEREOF
AGENT DE REVETEMENT AQUEUX, PROCEDE DE FABRICATION ET UTILISATION

(30) Priorität: 16.12.2005 DE 102005060302
(43) Veröffentlichungstag der Anmeldung: 03.09.2008
(73) Patentinhaber: BASF Coatings GmbH, 48165 Münster (DE)
(72) Erfinder: STEINMETZ, Bernhard, 97535 Rütschenhausen (DE); EBERT, Michaela, 97082 Würzburg (DE); RÖHR, Elke, 97299 Zell am Main (DE); DEPPISCH, Berthold, 97283 Riedenheim (DE); HÜCKMANN, Gerd, 97078 Würzburg (DE)
(74) Vertreter: Leifert, Elmar
(86) Internationale Anmeldenummer: PCT/EP2006/012020
(87) Internationale Veröffentlichungsnummer: WO 2007/073871

(56) Entgegenhaltungen:
- EP-A- 0 452 786
- EP-A- 1 717 284
- WO-A-2004/076506
- DE-A- 4 421 823
- DE-A- 4 437 535
- DE-A- 19 528 878
- DE-A-102004 013 729

## Beschreibung

### Gebiet der Erfindung

Die vorliegende Erfindung betrifft einen neuen Beschichtungsstoff. Außerdem betrifft die vorliegende Erfindung ein neues Verfahren zur Herstellung eines wässrigen Beschichtungsstoffs. Des Weiteren betrifft die vorliegende Erfindung die Verwendung des neuen Beschichtungsstoffs und des nach dem neuen Verfahren hergestellten, wässrigen Beschichtungsstoffs.

### Stand der Technik

Wässrige Beschichtungsstoffe, enthaltend mindestens ein gesättigtes, ungesättigtes und/oder mit olefinisch ungesättigten Verbindungen gepfropftes, ionisch und/oder nicht ionisch stabilisiertes Polyurethan, sind bekannt. Sie können physikalisch, thermisch oder thermisch und mit aktinischer Strahlung gehärtet werden. Vorzugsweise enthalten sie farb- und/oder effektgebende Pigmente und werden zur Herstellung von farb- und/oder effektgebenden Lackierungen, insbesondere Basislackierungen im Rahmen von Mehrschichtlackierungen oder Unidecklackierungen, verwendet.

Die bekannten wässrigen Beschichtungsstoffe können organische Lösemittel, insbesondere hochsiedende ("lange") organische Lösemittel, wie heterocyclische, aliphatische oder aromatische Kohlenwasserstoffe, ein- oder mehrwertige Alkohole, Ether, Ester und Ketone, wie z. B. N-Methylpyrrolidon, Toluol, Xylol, Butanol, Ethylen- und Butylglykol sowie deren Acetate, Butyldiglykol, Ethylenglykoldibutylether, Diethylenglykoldibutylether, Ethoxypropanol, Cyclohexanon, Methylethylketon, Aceton oder Isophoron, enthalten (vgl. die europäischen Patentanmeldungen EP 0 228 003 A1 und EP 0 634 431 A1).

Hiervon verhindert insbesondere N-Methylpyrrolidon wirksam die Bildung von Spritznebelstippen.

Aus dem deutschen Patent DE 100 43 405 C1 ist es bekannt, den wässrigen Beschichtungsstoffen Triorganophosphate, insbesondere Trialkyl- und/oder Tricycloalkylphosphate wie Tripropyl-, Tributyl-, Triamyl-, Trihexyl- oder Tricyclohexylphosphat zuzusetzen, um die Wasserdampfpermeabilität der applizierten Beschichtungsstoffe zu erhöhen und ihre Neigung zur Bildung von Kochern und Nadelstichen zu verringern.

Von diesen Triorganophosphaten hat sich Tributylphosphat als besonders wirksam erwiesen.

Allerdings werfen die N-Methylpyrrolidon und Tributylphosphat in der Praxis toxikologische Probleme auf, sodass man bestrebt ist, sie durch zumindest gleich wirkende, wenn nicht gar besser wirksame Stoffe zu ersetzen, die diese toxikologischen Probleme nicht mit sich bringen.

DE 44 21 823 A beschreibt aus mindestens drei Komponenten bestehende Beschichtungsmittel, wobei Komponente (I) als Bindemittel mindestens ein in organischem Lösemittel gelöstes oder dispergiertes Acrylatcopolymerisat und/oder ein Polyesterharz und/oder ein Polyurethanharz enthält, wobei die vorgenannten Bindemittel ein zahlenmittleres Molekulargewicht von 1000 bis 30000, eine Säurezahl von 5 bis 150 mg KOH/g und eine näher spezifizierte Hydroxylzahl besitzen, und eine 50 %-ige Lösung des Bindemittels ein Ethoxyethylpropionat eine Viskosität von ≤ 2,5 dPas bei 23 °C aufweist, die Komponente (II) mindestens ein nicht blockiertes Polyisocyanat als Vernetzungsmittel enthält und die Komponenten (III) im wesentlichen bindemittelfrei ist und Wasser enthält.

WO 2004/076506 offenbart wässrige Polyurethan-Polyacrylat-Hybrid-Sekundärdispersionen und daraus hergestellte wässrige Zweikomponenten-Beschichtungsmittel sowie ein Verfahren zu deren Herstellung und Verwendung.

### Aufgabe der Erfindung

Der vorliegenden Erfindung liegt die Aufgabe zugrunde, einen neuen wässrigen Beschichtungsstoff, enthaltend mindestens ein gesättigtes, ungesättigtes und/oder mit olefinisch ungesättigten Verbindungen gepfropftes, ionisch und/oder nicht ionisch stabilisiertes Polyurethan, bereitzustellen, der einfach herzustellen ist, keine toxikologisch bedenklichen Bestandteile mehr enthält und nach der Spritzapplikation keine oder nur sehr wenige Spritznebelstippen, Kocher und Nadelstiche aufweist.

Der neue wässrige Beschichtungsstoff soll sich insbesondere als Wasserbasislack zur Herstellung von farb- und/oder effektgebenden Basislackierungen von Mehrschichtlackierungen nach dem Nass-in-nass-Verfahren eignen. Dabei soll die applizierte Wasserbasislackschicht besonders gut von dem Klarlack benetzt werden.

Der neue wässrige Beschichtungsstoff soll Beschichtungen, vorzugsweise farb- und/oder effektgebende Beschichtungen, bevorzugt Basislackierungen und Unidecklackierungen, insbesondere Basislackierungen in Mehrschichtlackierungen, liefern, die völlig oder weitestgehend frei von Lackstörungen wie Spritznebelstippen, Kocher und Nadelstiche sind.

### Erfindungsgemäße Lösung

Demgemäß wurde der neue wässrige Beschichtungsstoff, enthaltend
(A) mindestens ein gesättigtes, ungesättigtes und/oder mit olefinisch ungesättigten Verbindungen gepfropftes, ionisch und/oder nicht ionisch stabilisiertes Polyurethan,
(B) mindestens ein Netz- oder Dispergierungsmittel und
(C) mindestens ein organisches Lösemittel, welches Triethylenglykol ist,
gefunden, der im Felgenden als »erfindungsgemäßer Beschichtungsstoff« bezeichnet wird.

Außerdem wurde das neue Verfahren zur Herstellung des erfindungsgemäßen Beschichtungsstoffs gefunden, bei dem man zumindest
(A) mindestens ein gesättigtes, ungesättigtes und/oder mit olefinisch ungesättigten Verbindungen gepfropftes, ionisch und/oder nicht ionisch
   stabilisiertes Polyurethan,
(B) mindestens ein Netz- oder Dispergierungsmittel und
(C) mindestens ein organisches Lösemittel, welches Triethylenglykol ist, mit Wasser vermischt und die resultierende Mischung homogenisiert und das im Folgenden als »erfindungsgemäßes Verfahren« bezeichnet wird.

Nicht zuletzt wurde die neue Verwendung des erfindungsgemäßen Beschichtungsstoffs und des nach dem erfindungsgemäßen Verfahren hergestellten Beschichtungsstoffs für die Herstellung von neuen thermoplastischen oder duroplastischen Materialien gefunden, was im folgenden als »erfindungsgemäße Verwendung« bezeichnet wird.

Weitere Erfindungsgegenstände gehen aus der Beschreibung hervor.

### Vorteile der Erfindung

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Beschichtungsstoffs, des erfindungsgemäßen Verfahrens und der erfindungsgemäßen Verwendung gelöst werden konnte.

Insbesondere war es überraschend, dass der erfindungsgemäße Beschichtungsstoff einfach herzustellen war, keine toxikologisch bedenklichen Bestandteile mehr enthielt und nach der Spritzapplikation keine oder nur sehr wenige Spritznebelstippen, Kocher und Nadelstiche aufwies.

überraschenderweise konnte der erfindungsgemäße Beschichtungsstoff im Rahmen der erfindungsgemäßen Verwendung für die Herstellung von erfindungsgemäßen thermoplastischen und duroplastischen, insbesondere duroplastischen, Materialien mit hervorragenden anwendungstechnischen Eigenschaften verwendet werden. Die erfindungsgemäßen thermoplastischen und duroplastischen Materialien konnten hervorragend als erfindungsgemäße Beschichtungen, Klebschichten, Dichtungen, Folien und Formteile, bevorzugt Beschichtungen, verwendet werden.

Der erfindungsgemäße Beschichtungsstoff eignet sich insbesondere hervorragend als Wasserbasislack zur Herstellung von farb- und/oder effektgebenden Basislackierungen von Mehrschichtlackierungen nach dem Nass-in-nass-Verfahren. Dabei wurde die applizierte Wasserbasislackschicht besonders gut von dem Klarlack benetzt.

Der erfindungsgemäße Beschichtungsstoff lieferte im Rahmen der erfindungsgemäßen Verwendung erfindungsgemäße Beschichtungen, vorzugsweise erfindungsgemäße farb- und/oder effektgebende Beschichtungen, bevorzugt Basislackierungen und Unidecklackierungen, insbesondere Basislackierungen in Mehrschichtlackierungen, die völlig oder weitestgehend frei von Lackstörungen wie Spritznebelstippen, Kocher und Nadelstiche waren. Darüber hinaus wiesen sie ein besonders hohes Deckvermögen und einen hervorragenden optischen Gesamteindruck (Appearance) auf. Der erfindungsgemäße Beschichtungsstoff war daher hervorragend für die Lackierung von Automobilkarosserien geeignet.

### Ausführliche Beschreibung der Erfindung

Der erfindungsgemäße Beschichtungsstoff ist physikalisch, thermisch oder thermisch und mit aktinischer Strahlung härtbar. Dabei kann die thermisch oder thermisch und mit aktinischer Strahlung erfolgende Härtung durch die physikalische Härtung unterstützt werden.

Im Rahmen der vorliegenden Erfindung bedeutet der Begriff "physikalische Härtung" die Härtung einer Schicht aus einem Beschichtungsstoff durch Verfilmung gegebenenfalls nach der Trocknung der Schicht. Üblicherweise sind hierfür keine Vernetzungsmittel notwendig. Gegebenenfalls kann die physikalische Härtung durch Luftsauerstoff oder durch Bestrahlen mit aktinischer Strahlung unterstützt werden.

Im Rahmen der vorliegenden Erfindung bedeutet der Begriff "thermische Härtung" die durch Hitze initiierte Härtung einer Schicht aus einem Beschichtungsstoff, bei der üblicherweise ein separat vorliegendes Vernetzungsmittel angewandt wird. Das Vernetzungsmittel enthält reaktive funktionelle Gruppen, die zu den in den Polyurethanen (A) vorhandenen reaktiven funktionellen Gruppen komplementär sind. Üblicherweise wird dies von der Fachwelt als Fremdvemetzung bezeichnet. Sind bereits die komplementären reaktiven funktionellen Gruppen oder autoreaktive funktionelle Gruppen, d. h. Gruppen, die "mit sich selbst" reagieren, in den Polyurethanen (A) vorhanden, sind diese selbst vernetzend. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28, bis Seite 9, Zeilen 24, bekannt.

Im Rahmen der vorliegenden Erfindung ist unter aktinischer Strahlung elektromagnetische Strahlung wie nahes Infrarot (NIR), sichtbares Licht, UV-Strahlung, Röntgenstrahlung oder gamma-Strahlung, insbesondere UV-Strahlung, und Korpuskularstrahlung wie Elektronenstrahlung, Betastrahlung, Alphastrahlung, Protonenstrahlung oder Neutronenstrahlung, insbesondere Elektronenstrahlung, zu verstehen. Die Härtung durch UV-Strahlung wird üblicherweise durch radikalische oder kationische Photoinitiatoren initiiert.

Werden die thermische Härtung und die Härtung mit aktinischem Licht bei einem erfindungsgemäßen Beschichtungsstoff gemeinsam angewandt, spricht man auch von "Dual Cure".

Der erfindungsgemäße Beschichtungsstoff kann ein Einkomponenten(1K)-System sein.

Im Rahmen der vorliegenden Erfindung ist unter einem Einkomponenten(1K)-System ein thermisch härtender Beschichtungsstoff zu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und/oder bei Bestrahlen mit aktinischer Strahlung miteinander vernetzen.

Der erfindungsgemäße Beschichtungsstoff kann des weiteren ein Zweikomponenten(2K)- oder Mehrkomponenten(3K, 4K)-System sein.

Im Rahmen der vorliegenden Erfindung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Der erste wesentliche Bestandteil des erfindungsgemäßen Beschichtungsstoffs ist mindestens ein, insbesondere ein, gesättigtes, ungesättigtes und/oder mit olefinisch ungesättigten Verbindungen gepfropftes, ionisch und/oder nicht ionisch stabilisiertes Polyurethan (A), vorzugsweise auf der Basis aliphatischer, cycloaliphatischer, aliphatisch-cycloaliphatischer, aromatischer, aliphatischaromatischer und/oder cycloaliphatisch-aromatischer Polyisocyanate. Zur Stabilisierung enthält das Polyurethan (A) entweder
(a1) funktionelle Gruppen, die durch Neutralisationsmittel und/oder Quaternisierungsmittel in Kationen überführt werden können, und/oder kationische Gruppen oder
(a2) funktionelle Gruppen, die durch Neutralisationsmittel in Anionen überführt werden können, und/oder anionische Gruppen und/oder
(a3) nicht ionische hydrophile Gruppen

Geeignete Polyurethane (A) sind beispielsweise aus
- der deutschen Patentanmeldung DE 199 14 98 A1, Spalte 1, Zeilen 29 bis 49, und Spalte 4, Zeile 23, bis Spalte 11, Zeile 5,
- der deutschen Patentanmeldung DE 199 48 004 A1, Seite 4, Zeile 19, bis Seite 13, Zeile 48,
- der europäischen Patentanmeldung EP 0 228 003 A1, Seite 3, Zeile 24, bis Seite 5, Zeile 40,
- der europäischen Patentanmeldung EP 0 634 431 A1, Seite 3, Zeile 38, bis Seite 8, Zeile 9, oder
- der internationalen Patentanmeldung WO 92/15405, Seite 2, Zeile 35, bis Seite 10, Zeile 32,
bekannt.

In dem erfindungsgemäßen Beschichtungsstoff sind sie in den üblichen und bekannten Mengen enthalten.

Ist der erfindungsgemäße Beschichtungsstoff physikalisch, thermisch selbst vernetzend oder thermisch selbst vernetzend und mit aktinischer Strahlung härtbar, liegt sein Gehalt an Polyurethanen (A) vorzugsweise bei 50 bis 100 Gew.-%, bevorzugt 50 bis 90 Gew.-% und insbesondere 50 bis 80 Gew.-%, jeweils bezogen auf den filmbildenden Festkörper des erfindungsgemäßen Beschichtungsstoffs.

Ist der erfindungsgemäße Beschichtungsstoff thermisch fremd vernetzend oder thermisch fremd vernetzend und mit aktinischer Strahlung härtbar, liegt sein Gehalt an Polyurethanen (A) vorzugsweise bei 10 bis 80, bevorzugt 15 bis 75 und insbesondere 20 bis 70 Gew.-%, jeweils bezogen auf den filmbildenden Festkörper des erfindungsgemäßen Beschichtungsstoffs.

Im Rahmen der vorliegenden Erfindung ist unter dem filmbildenden Festkörper die Summe aller Bestandteile des erfindungsgemäßen Beschichtungsstoffs zu verstehen, die den Festkörper der hieraus hergestellten erfindungsgemäßen thermoplastischen oder duroplastischen Materialien, vorzugsweise der erfindungsgemäßen thermoplastischen oder duroplastischen Beschichtungen, Klebschichten, Dichtungen, Folien und Formteile insbesondere der erfindungsgemäßen duroplastischen Beschichtungen, aufbauen, zu verstehen.

Der zweite wesentliche Bestandteil des erfindungsgemäßen Beschichtungsstoffs ist mindestens ein Netz- oder Dispergierungsmittel (B), das aus der Gruppe, bestehend aus hyperverzweigten Polymeren, polyethermodifizierten Polydimethylsiloxanen, ionischen und nicht-ionischen (Meth)Acrylatcopolymerisaten, hochmolekularen Blockcopolymerisaten mit pigmentaffinen Gruppen und Dialkylsulfosuccinaten, ausgewählt ist. Insbesondere werden hyperverzweigte Polymere verwendet.

Die Netz- oder Dispergierungsmittel (B) sind an sich bekannte, im Handel erhältliche Materialien und werden beispielsweise von der Firma Cognis unter den Marken Starfactant® 20 und Hydropalat® 875, von der Firma Byk Chemie unter der Marke Disperbyk® 162, 163 und 182 und Byk® 348, 355, 381 und 390, von der Firma Coatex unter den Marken Coatex® P90 und BP3 und der Firma Efka unter der Marke Efka® 4580 vertrieben. Insbesondere wird Starfactant® 20 verwendet.

Die Netz- oder Dispergierungsmittel (B) werden in den üblichen und bekannten, wirksamen Mengen verwendet. Vorzugsweise werden sie in einer Menge von 0,01 bis 5 bevorzugt 0,05 bis 2,5 und insbesondere 0,1 bis 1,5 Gew.-%, jeweils bezogen auf den erfindungsgemäßen Beschichtungsstoff verwendet.

Der dritte wesentliche Bestandteil des erfindungsgemäßen Beschichtungsstoffs ist mindestens ein organisches Lösemittel (C), welches Triethylenglykol ist.

Die Menge des organischen Lösemittels (C) kann breit variieren und so optimal den Erfordernissen des Einzelfalls angepaßt werden. Im Hinblick auf die wässrige Natur des erfindungsgemäßen Beschichtungsstoffs ist man aber bestrebt, seinen Gehalt an organischem Lösemittel (C) so gering wie möglich zu halten. Hierbei ist es ein besonderer Vorteil, dass ein Gehalt des erfindungsgemäßen Beschichtungsstoffs an organischem Lösemittel (C) von 0, 1 bis 10, bevorzugt 0,5 bis 7 und insbesondere 0,5 bis 5 Gew.-%, jeweils bezogen auf den erfindungsgemäßen Beschichtungsstoff, ausreicht, um die vorteilhaften technischen Effekte der Erfindung zu erzielen.

Darüber hinaus kann der erfindungsgemäße Beschichtungsstoff noch mindestens einen Zusatzstoff (D) enthalten. Vorzugsweise enthält er mindestens zwei Zusatzstoffe (D). Bevorzugt wird der Zusatzstoff (D) aus der Gruppe der auf dem Gebiet der Beschichtungsstoffe üblicherweise verwendeten Zusatzstoffe ausgewählt. Besonders bevorzugt wird der Zusatzstoff (D) aus der Gruppe, bestehend aus rückstandsfrei oder im Wesentlichen rückstandsfrei thermisch zersetzbaren Salzen; von den Polyurethanen (A) verschiedenen physikalisch, thermisch und/oder mit aktinischer Strahlung härtbaren Bindemitteln; Vernetzungsmitteln; von den organischen Lösemitteln (C) verschiedenen organischen Lösemitteln; thermisch härtbaren Reaktiwerdünnern; mit aktinischer Strahlung härtbaren Reaktivverdünnern; farb- und/oder effektgebenden Pigmenten; transparenten Pigmenten; Füllstoffen; molekulardispers löslichen Farbstoffen; Nanopartikeln; Lichtschutzmitteln; Antioxidantien; Entlüftungsmitteln; Emulgatoren; Slipadditiven; Polymerisationsinhibitoren; Initiatoren der radikalischen Polymerisation; thermolabilen radikalischen Initiatoren; Haftvermittlern; Verlaufmitteln; filmbildenden Hilfsmitteln, wie Verdicker und strukturviskose Sag control agents, SCA; Flammschutzmitteln; Korrosionsinhibitoren; Rieselhilfen; Wachsen; Sikkativen; Bioziden und Mattierungsmitteln; ausgewählt.

Geeignete Zusatzstoffe (D) der vorstehend genannten Art sind beispielsweise aus
- der deutschen Patentanmeldung DE 199 48 004 A1, Seite 14, Zeile 4, bis Seite 17, Zeile 5,
- der deutschen Patentanmeldung DE 199 14 98 A1, Spalte 11, Zeile 9, bis Spalte 15, Zeile 63, oder
- dem deutschen Patent DE 100 43 405 C1, Spalte 5, Absätze [0031] bis [0033],
bekannt. Sie werden in den üblichen und bekannten, wirksamen Mengen eingesetzt.

Der Festkörpergehalt des erfindungsgemäßen Beschichtungsstoffs kann sehr breit variieren und daher den Erfordernissen des Einzelfalls optimal angepaßt werden. In erster Linie richtet sich der Festkörpergehalt nach der für die Applikation, insbesondere Spritzapplikation, erforderlichen Viskosität, sodass er vom Fachmann aufgrund seines allgemeinen Fachwissens gegebenenfalls unter Zuhilfenahme weniger orientierender Versuche eingestellt werden kann. Vorzugsweise liegt der Festkörpergehalt bei 5 bis 70, bevorzugt 10 bis 65 und insbesondere 15 bis 60 Gew.-%, jeweils bezogen auf den erfindungsgemäßen Beschichtungsstoff.

Die Herstellung des erfindungsgemäßen Beschichtungsstoffs erfolgt vorzugsweise mit Hilfe des erfindungsgemäßen Verfahrens. Dabei werden die vorstehend beschriebenen Bestandteile (A), (B) und (C) sowie gegebenenfalls (D) in einem wäßrigen Medium, insbesondere in Wasser, dispergiert, wonach man die resultierende Mischung homogenisiert. Methodisch gesehen, weist das erfindungsgemäße Verfahren keine methodischen Besonderheiten auf, sondern kann mit Hilfe der üblichen und bekannten Mischverfahren und Mischaggregate, wie Rührkessel, Dissolver, Rührwerksmühlen, Kneter, statische Mischer oder Extruder, durchgeführt werden.

Wegen der zahlreichen besonderen Vorteile des erfindungsgemäßen Beschichtungsstoffs und des mit Hilfe des erfindungsgemäßen Verfahrens hergestellten erfindungsgemäßen Beschichtungsstoffs können diese zahlreichen Verwendungszwecken zugeführt werden. Vorzugsweise werden sie für die Herstellung der erfindungsgemäßen thermoplastischen und duroplastischen, insbesondere duroplastischen, Materialien verwendet. Bevorzugt werden sie als erfindungsgemäße Beschichtungsstoffe, Klebstoffe, Dichtungsmassen und Vorstufen für Folien und Formteilen für die Herstellung der erfindungsgemäßen thermoplastischen und duroplastischen, insbesondere duroplastischen, Beschichtungen, Klebschichten, Dichtungen, Folien und Formteilen, besonders bevorzugt Beschichtungen, die mit grundierten und ungrundierten Substraten aller Art haftfest oder wieder ablösbar verbunden sein können, verwendet.

Insbesondere die erfindungsgemäßen Beschichtungen, Klebschichten und Dichtungen sind mit den Substraten haftfest verbunden.

Beispiele geeigneter Substrate sind aus
- der deutschen Patentanmeldung DE 199 48 004 A1, Seite 17, Zeilen 12 bis 36, oder
- dem deutschen Patent DE 100 43 405 C1, Spalte 2, Absatz [0008], bis Spalte 3, Absatz [0017],
bekannt.

Besonders bevorzugt werden die erfindungsgemäßen Beschichtungsstoffe als Unidecklacke zur Herstellung einschichtiger Unidecklackierungen oder als Wasserbasislacke zur Herstellung farb- und/oder effektgebender Mehrschichtlackierungen eingesetzt. Ganz besonders bevorzugt werden sie dabei als Wasserbasislacke zur Herstellung farb- und/oder effektgebender Basislackierungen von Mehrschichtlackierungen, bevorzugt Mehrschichtlackierungen für Automobilkarosserien, verwendet. Hierbei sind sie hervorragend für die Erstlackierung (OEM) und die Reparaturlackierung geeignet.

Ganz besonders bevorzugt werden die erfindungsgemäßen Mehrschichtlackierungen durch Nass-in-nass-Verfahren hergestellt, bei denen man
(1) mindestens einen Wasserbasislack auf ein grundiertes oder ungrundiertes Substrat appliziert, wodurch mindestens eine Wasserbasislackschicht (1) resultiert,
(2) mindestens einen Klarlack auf die Wasserbasislackschicht (1) appliziert, wodurch mindestens eine Klarlackschicht (2) resultiert, und
(3) zumindest die Wasserbasislackschicht(en) (1) und die Klarlackschicht(en) (2) gemeinsam härtet, wodurch die Basislackierung (1) und die Klarlackierung (2) resultieren.

Beispiele solcher Nass-in-nass-Verfahren sind aus
- der deutschen Patentanmeldung DE 199 48 004 A1, Seite 17, Zeile 37, bis Seite 19, Zeile 22, oder
- dem deutschen Patent DE 100 43 405 C1, Spalte 3, Absatz [0018], und Spalte 8, Absatz [0052], bis Spalte 9, Absatz [0057], i. V. m. Spalte 6, Absatz [0039], bis Spalte 8, Absatz [0050],
bekannt. Es werden die dort beschriebenen Schichtdicken für die einzelnen Lackierungen der erfindungsgemäßen Mehrschichtlackierung angewandt.

Aufgrund der hervorragenden anwendungstechnischen Eigenschaften des erfindungsgemäßen Beschichtungsstoffs weisen die hieraus hergestellten erfindungsgemäßen thermoplastischen und duroplastischen Materialien ebenfalls ein hervorragend ausgewogenes physikalisch chemisches, optisches und mechanisches Eigenschaftsprofil auf. Deshalb haben auch die erfindungsgemäßen Folien und Formteile sowie die Substrate, die mit den erfindungsgemäßen Beschichtungen beschichtet, mit den erfindungsgemäßen Klebschichten verklebt, mit den erfindungsgemäßen Dichtungen abgedichtet, mit den erfindungsgemäßen Folien bedeckt und/oder mit den erfindungsgemäßen Formteilen verbunden sind, einen besonders hohen Gebrauchswert und eine besonders lange Gebrauchsdauer.

### Beispiele

### Herstellbeispiel 1

### Die Herstellung eines grauen Wasserbasislacks 1

Zur besseren Beurteilung gegebenenfalls auftretender Lackstörungen wurde ein grauer Wasserbasislack verwendet, der nach der folgenden Vorschrift hergestellt wurde.

### Mischung 1a:

In einem Dissolver wurden 26 Gewichtsteile eines anorganischen Verdickungsmittels (Natrium-Magnesium-Schichtsilikat, 3 Gew.-%-ig in Wasser) vorgelegt. Hierzu wurden 30 Gewichtsteile deionisiertes Wasser, 107,5 Gewichtsteile Butylglykol, 4,5 Gewichtsteile eines gemäß Seite 7, Zeile 55, bis Seite 8, Zeile 23, der deutschen Patentanmeldung DE 44 37 535 A1 hergestellten polyurethanmodifizierten Polyacrylates und 0,6 Gewichtsteile einer 20,5 Gew.-%-igen Lösung eines handelsüblichen Entschäumers Nopco® DSX 1550 unter Rühren zugegeben. Es resultierte die Mischung 1 a.

### Mischung 1b:

Getrennt hiervon wurden 3,2 Gewichtsteile einer gemäß Beispiel D., Spalte 16, Zeilen 37 bis 59, der deutschen Patentanmeldung DE 40 09 858 A1 hergestellten, wässrigen Polyesterharzdispersion, 0,3 Gewichtsteile einer Tensidlösung, enthaltend 52 Gew.-% Surfynol® 104 der Firma Air Products, 55 Gewichtsteile Butylglykol, 4,1 Gewichtsteile eines handelsüblichen, wasserverdünnbaren Melaminformaldehydharzes in n-Butanol (Cymel® 203 der Firma Surface Specialties Austria) und 0,3 Gewichtsteile einer 10 Gew.-%-igen Lösung von Dimethylethanolamin in Wasser miteinander vermischt. Es resultierte die Mischung 1 b.

### Mischung 1c:

Die Mischungen 1 a und 1 b wurden miteinander vermischt. Es resultierte die Mischung 1 c.

### Mischung 1d:

Die Mischung 1c wurde mit 6 Gewichtsteilen deionisiertem Wasser, 20,4 Gewichtsteilen eines gemäß Seite 19, Zeile 44, bis Seite 20, Zeile 7, der deutschen Patentanmeldung DE 199 48 004 A1 hergestellten, polyurethanmodifizierten Polyacrylates, 1,6 Gewichtsteilen einer Tensidlösung, enthaltend 52 Gew.-% Surfynol® 104, 48 Gewichtsteilen Butoxyethanol, 0,4 Gewichtsteilen einer 10 Gew.-%-igen Lösung von Dimethylethanolamin in Wasser, 1,6 Gewichtsteilen n-Butanol und 3,9 Gewichtsteilen einer 3 Gew.-%-igen Lösung eines Polyacrylat-Verdickungsmittels (Viscalex® der Firma Ciba) versetzt. Es resultierte die Mischung 1d.

### Russpaste:

Die Russpaste wurde aus 25 Gewichtsteilen einer gemäß der internationalen Patentanmeldung WO 91/15528 hergestellten Polyacrylatdispersion, 10 Gewichtsteilen Ruß, 0,1 Gewichtsteilen Methylisobutylketon, 1,36 Gewichtsteilen Dimethylethanolamin, 2 Gewichtsteilen eines handelsüblichen Polyethers (Pluriol® P900 der Firma BASF Aktiengesellschaft) und 61,45 Gewichtsteilen deionisiertem Wasser hergestellt.

### Blaupaste 1:

Die Blaupaste 1 wurde aus 19,4 Gewichtsteilen einer nach Spalte 16, Zeilen 10 bis 35, der deutschen Patentanmeldung DE 40 09 858 A1 hergestellten Polyurethandispersion, 13,5 Gewichtsteilen Paliogen® Blau L 6482, 4,3 Gewichtsteilen Butoxyethanol, 0,18 Gewichtsteilen Methylethylketon, 0,62 Gewichtsteilen Dimethylethanolamin, 1,2 Gewichtsteilen Pluriol® P900 und 61 Gewichtsteilen Wasser hergestellt.

### Blaupaste 2:

Die Blaupaste 2 wurde aus 15,4 Gewichtsteilen einer gemäß der internationalen Patentanmeldung WO 91/15528 hergestellten Polyacrylatdispersion, 30 Gewichtsteilen Paliogen® Blau L 6470, 2,6 Gewichtsteilen Disperbyk® 184, 1,6 Gewichtsteilen Dipropylenglykolmonomethylether, 0,1 Gewichtsteilen Methylisobutylketon, 0,65 Gewichtsteilen Dimethylethanolamin, 0,8 Gewichtsteilen 1,2-Propylenglykol und 45 Gewichtsteilen deionisiertem Wasser hergestellt.

### Violettpaste:

Die Violettpaste wurden aus 23 Gewichtsteilen einer gemäß Beispiel 1, Seite 14, Zeile 13, bis Seite 15, Zeile 27, der internationalen Patentanmeldung WO 92/15405 hergestellten, wässrigen Polyurethandispersion, 18,4 Gewichtsteilen Quindo Violet® 19 228-6902, 5 Gewichtsteilen Butylglykol, 0,2 Gewichtsteilen Methylethylketon, 0,26 Gewichtsteilen Dimethylethanolamin, 2 Gewichtsteilen Pluriol® P900 und 51 Gewichtsteilen deionisiertem Wasser hergestellt.

### Pastenmischung:

Die Pastenmischung wurde aus 2,5 Gewichtsteilen der Russpaste, 1,Gewichtsteilen der Blaupaste 1, 0,3 Gewichtsteilen der Blaupaste 2, 0,75 Gewichtsteilen der Violettpaste und 0,5 Gewichtsteilen einer nach Beispiel 1 der deutschen Patentanmeldung DE 100 04 494 A 1 hergestellten, Paste hergestellt.

### Mischung 1e:

Die Mischung 1e wurde aus der Pastenmischung und der Mischung 1d hergestellt.

### Aluminiumeffektpigmentpaste:

Die Aluminiumeffektpigmentpaste wurde aus 0,18 Gewichtsteilen aus einer ersten 65 Gew.-%-igen Aluminiumeffektpigment-Anteigung (Alu-Stapa-Hydrolux® 2153 der Firma Eckart) und einer zweiten 65 Gew.-%-igen Aluminiumeffektpigment-Anteigung (Alu-Stapa-Hydrolux 8154 der Firma Eckart), 0,55 Gewichtsteilen Butylglykol und 0,28 Gewichtsteilen der gemäß Beispiel D., Spalte 16, Zeilen 37 bis 59, der deutschen Patentanmeldung DE 40 09 858 A1 hergestellten, wässrigen Polyesterharzdispersion hergestellt.

### Wasserbasislack 1:

Der Wasserbasislack 1 wurde aus der Mischung 1e, der Aluminiumeffektpigmentpaste und zwei Gewichtsteilen Wasser hergestellt. Anschließend wurde er mit Dimethylethanolamin auf einen pH-Wert von 8 und mit deionisiertem Wasser auf eine Viskosität von 58 mPas bei einer Scherbelastung von 1.000/Sekunde und 23°C eingestellt.

Erfindungsgemäßes Beispiel 1, nicht erfindungsgemäße Beispiele 2 bis 7 und Vergleichsversuch V1

Die Herstellung des erfindungsgemäßen Wasserbasislacks 2 (Beispiel 1), der nicht erfindungsgemäßen Wasserbasislacke 3 bis 8 (Beispiele 2 bis 7) und des Wasserbasislacks V1 (Vergleichsversuch V1)

### Wasserbasislack V1:

Zur Herstellung des Wasserbasislacks V1 wurde der Wasserbasislack 1 des Herstellbeispiels 1 mit 0,5 Gew.-% N-Methylpyrrolidon versetzt.

Zur Herstellung der Wasserbasislacke 2 bis 8 wurde der Wasserbasislack 1 des Herstellbeispiels 1 mit den in der Tabelle 1 angegebenen organischen Lösemitteln (C) und Netz- oder Dispergierungsmitteln (8) versetzt.

**Tabelle 1: Zusammensetzung der Wasserbasi slacke (WBL) 2 bis 8 der Beispiele 1 bis 7**

| Beispiel/ WBL | Lösemittel (C) (Gew.-%) | Netz- oder Dispergierungsmittel (B) (Gew.-%) |
|---|---|---|
| 1/2 | Triethylenglykol (2) | Starfactant® 20 der Firma Cognis (hyperverzweigtes Polymer) (0,5) |
| 2/3 | gamma-Butyrolacton (2) | Starfactant® 20 (0,5) |
| 3/4 | N-(2-Hydroxyethyl)-morpholin (2) | Disperbyk® 182 der Firma Byk Chemie (hochmolekulares Blockcopolymer mit pigmentaffinen Gruppen) (0,5) |
| 4/5 | 2-Methyl-1-butanol (2) | Byk® 348 der Firma Byk Chemie (polyethermodifizi ertes Polydimethylsiloxan) (0,5) |
| 5/6 | 2-Methyl-1-butanol (2) | Disperbyk® 182 |
| *617* | N-(2-Hydroxyethyl)-morpholin (3) | Additol® XW (= 395 Byk® 381 der Firma Byk Chemie) (ionisches (Meth)Acrylatcopolymerisat) (0,5) |
| *718* | N-(2-Hydroxyethyl)-morpholin (3) | Efka® 4580 der Firma Efka (nicht-ionisches hochmolekulares Polymerisat) (0,5) |

Die Gewichtsprozentangaben der Tabelle 1 beziehen sich auf den jeweiligen Wasserbasislack.

Erfindungsgemäßes Beispiel 8, nicht erfindungsgemäße Beispiele 9 bis 14 und Vergleichsversuch V2

Die Herstellung der Mehrschichtlackierungen 2 bis 8 (Beispiele 8 bis 14) und der Mehrschichtlackierung V1 (Vergleichsversuch V2)

Für die Herstellung der Mehrschichtlackierung V1 des Vergleichsversuchs V2 wurde der Wasserbasislack V1 des Vergleichsversuchs V1 verwendet.

Für die Herstellung der Mehrschichtlackierungen 2 bis 8 der Beispiele 8 bis 14 wurden die Wasserbasislacke 2 bis 8 der Beispiele 1 bis 7 in der in der Tabelle 2 angegebenen Weise verwendet.

**Tabelle 2: Die Mehrschichtlackierungen 2 bis 8 der Beispiele 8 bis 14**

| Wasserbasislack | Beispiel | Mehrschichtlackierung | Beispiel |
|---|---|---|---|
| | | | |
| 2 | 1 | 2 | 8 |
| 3 | 2 | 3 | 9 |
| 4 | 3 | 4 | 10 |
| 5 | 4 | 5 | 11 |
| 6 | 5 | 6 | 12 |
| 7 | 6 | 7 | 13 |
| 8 | 7 | 8 | 14 |

Zur Bestimmung der Spritznebelstippen wurden die Mehrschichtlackierungen V1 und 2 bis 8 nach der folgenden allgemeinen Vorschrift hergestellt:

Einen mit einer Füllerlackierung versehenes Stahlblech der Abmessungen 30 x 50 cm wurde aus einem Abstand von 1,5 Meter während 30 Sekunden mit einem Wasserbasislack benebelt. Nach einer Ablüftzeit von 2 Minuten wurde der Wasserbasislack mit 1,5 Sprühkreuzgängen appliziert, wonach die resultierende Schicht während einer Minute abgelüftet wurde. Anschließend wurde noch einmal Wasserbasislack mit einem Sprühkreuzgang aufgetragen. Die resultierende Wasserbasislackschicht wurde während einer Minute bei Raumtemperatur abgelüftet und anschließend während 10 Minuten im Umluftofen bei 70°C getrocknet. Auf die getrocknete Wasserbasislackschicht wurde ein üblicher und bekannter Zweikomponentenklarlack appliziert. Anschließend wurden die Wasserbasislackschicht und Klarlackschicht in einem Umluftofen während 20 Minuten bei 140°C gehärtet. Die Anzahl der Spritznebelstippen in der Mehrschichtlackierung wurde visuell bestimmt. Die Tabelle 3 gibt einen Überblick über die Versuchsergebnisse.

**Tabelle 3: Spritznebelstippen in den Mehrschichtlackierungen**

| Beispiel /Vergleichsversuch | Anzahl der Spritznebelstippen | Note |
|---|---|---|
| | | |
| V2 | 2 | iO |
| 8 | 2 | iO |
| 9 | 1 | iO |
| 10 | 2 | iO |
| 11 | 6 | iO |
| 12 | 4 | iO |
| 13 | 3 | iO |
| 14 | 2 | iO |

Die Versuchsergebnisse der Tabelle 3 untermauerten, dass Triethylenglykol als organisches Lösemittel (C) einen gleichwertigen Ersatz für N-Methylpyrrolidon bot. Dies galt auch hinsichtlich der Benetzung der Wasserbasislackschichten durch den Klarlack.

### Herstellbeispiel 2

### Der Herstellung des Wasserbasislacks 9

Zur Herstellung des Wasserbasislacks 9 wurde der Wasserbasislack 1 des Herstellbeispiels 1 mit 2 Gew.-% Entschäumer T der Firma Borchers vermischt und mit deionisiertem Wasser auf eine Viskosität von 70 bis 75 mPas bei einer Scherbelastung von 1.000/Sekunde bei 23°C eingestellt.

### Beispiele 15 bis 20

Die Herstellung der erfindungsgemäßen Wasserbasislacke 10 und 11, und der nicht erfindungsgemäßen Wasserbasislacke 12 bis 15

Zur Herstellung der Wasserbasislacke 10 bis 15wurde der Wasserbasislack 9 des Herstellbeispiels 2 mit den in der Tabelle 4 angegebenen organischen Lösemitteln (C) und Netz- oder Dispergierungsmitteln (B) versetzt.

**Tabelle 4: Zusammensetzung der Wasserbasi slacke (WBL) 10 bis 15 der Beispiele 15 bis 20**

| Beispiel/ WBL | Lösemittel (C) (Gew.-%) | Netz- oder Dispergierungsmittel (B) (Gew.-%) |
|---|---|---|
| 15/10 | Triethylenglykol (2) | Disperbyk® 182 (1,0) |
| 16/11 | Triethylenglykol (2) | Disperbyk® 182 (0,5 |
| 17/12 | 2-Methyl-1-butanol (3) | Byk® 348 (0,5) |
| 18/13 | 2-Methyl-1-butanol (3) | Disperbyk® 182 (0,5) |
| 19/14 | 2-Methyl-1-butanol (3) | Starfactant® 20 |
| 20/15 | gamma -Butyrolacton (3) | Disperbyk® 163 der Firma Byk Chemie (hochmolekulares Blockcopolymer mit pigmentaffinen Gruppen) |

Die Gewichtsprozentangaben in der Tabelle 4 beziehen sich auf den jeweiligen Wasserbasislack.

### Erfindungsgemäße Beispiele 21 und 22, nicht erfindungsgemäße Beispiele 23 bis 26 und Vergleichsversuch V3

### Die Herstellung der Mehrschichtlackierungen 10 bis 15 der Beispiele 21 bis 26 und der Mehrschichtlackierung 9 des Vergleichsversuchs V3

Für die Herstellung der Mehrschichtlackierung 9 des Vergleichsversuchs V3 wurde der Wasserbasislack 9 des Herstellbeispiels 2 verwendet.

Für die Herstellung der Mehrschichtlackierungen 10 bis 15 der Beispiele 21 bis 26 wurden die Wasserbasislacke 10 bis 15 der Beispiele 15 bis 20 in der in der Tabelle 5 angegebenen Weise verwendet.

**Tabelle 5: Die Mehrschichtlackierungen 10 bis 15 der Beispiele 21 bis 26**

| **Wasserbasislack** | **Beispiel** | **Mehrschichtlackierung** | **Beispiel** |
|---|---|---|---|
| | | | |
| 10 | 15 | 10 | 21 |
| 11 | 16 | 11 | 22 |
| 12 | 17 | 12 | 23 |
| 13 | 18 | 13 | 24 |
| 14 | 19 | 15 | 25 |
| 15 | 20 | 15 | 26 |

Zur Bestimmung der Nadelstichgrenze und der Nadelstichanzahl wurden die Mehrschichtlackierungen nach der folgenden allgemeinen Vorschrift hergestellt:

Ein mit einer Füllerlackierung beschichtetes Stahlblech der Abmessungen 30 x 50 cm wurde an einer Längskante mit einem Klebstreifen versehen, um nach der Beschichtung die Schichtdickendifferenzen ermitteln zu können. Der Wasserbasislack wurde keilförmig elektrostatisch appliziert. Die resultierende Wasserbasislackschicht wurde während einer Minute bei Raumtemperatur abgelüftet und anschließend während 10 Minuten im Umluftofen bei 70°C getrocknet. Auf die getrocknete Wasserbasislackschicht wurde ein üblicher und bekannter Zweikomponentenklarlack appliziert. Die resultierende Klarlackschicht wurde während 20 Minuten bei Raumtemperatur abgelüftet. Anschließend wurden die Wasserbasislackschicht und die Klarlackschicht in einem Umluftofen während 20 Minuten bei 140°C gehärtet. Nach der visuellen Auswertung der Nadelstiche in der resultierenden keilförmigen Mehrschichtlackierung wurde die Schichtdicke der Nadelstichgrenze bestimmt. Die Ergebnisse finden sich in der Tabelle 6.

**Tabelle 6: Nadelstichgrenze und Nadelstichanzahl**

| **BeispielNergleichsversuch** | **Nadelstichgrenze (µm)** | **Nadelstichanzahl** |
|---|---|---|
| | | |
| V3 | 10 | 40 |
| 21 | 10 | 3 |
| 22 | 11 | 12 |
| 23 | 12 | 10 |
| 24 | 17 | 1 |
| 25 | 13 | 1 |
| 26 | 11 | 2 |

Die Ergebnisse untermauerten, dass das organische Lösemittel (C), welches Triethylenglykol ist, die Nadelstichgrenze signifikant erhöht und gleichzeitig die Nadelstichanzahl signifikant senkt. Außerdem wurden die Wasserbasislackschichten der Beispiele 21 bis 26 besser mit dem Klarlack benetzt als die Wasserbasislackschicht des Vergleichsversuchs V3.

## Patentansprüche

1. Wässriger Beschichtungsstoff, enthaltend
(A) mindestens ein gesättigtes, ungesättigtes und/oder mit olefinisch ungesättigten Verbindungen gepfropftes, ionisch und/oder nicht ionisch stabilisiertes Polyurethan,
(B) mindestens ein Netz- oder Dispergierungsmittel und
(C) mindestens ein organisches Lösemittel, welches Triethylenglykol ist.

2. Wässriger Beschichtungsstoff nach Anspruch 1, **dadurch gekennzeichnet, dass** das Netz- oder Dispergierungsmittel (B) aus der Gruppe, bestehend aus hyperverzweigten Polymeren, polyethermodifizierten Polydimethylsiloxanen, ionischen und nicht-ionischen (Meth)Acrylatcopolymerisaten, hochmolekularen Blockcopolymerisaten mit pigmentaffinen Gruppen und Dialkylsulfosuccinaten, ausgewählt ist.

3. Wässriger Beschichtungsstoff nach Anspruch 2, **dadurch gekennzeichnet, dass** das Netz- oder Dispergierungsmittel (B) ein hyperverzweigtes Polymer ist.

4. Wässriger Beschichtungsstoff nach einem der Ansprüche 1 bis 3, **dadurch gekennzeichnet, dass** das Polyurethan (A) entweder
(a1) funktionelle Gruppen, die durch Neutralisationsmittel und/oder Quaternisierungsmittel in Kationen überführt werden können, und/oder kationische Gruppen oder
(a2) funktionelle Gruppen, die durch Neutralisationsmittel in Anionen überführt werden können, und/oder anionische Gruppen und/oder
(a3) nicht ionische hydrophile Gruppen
enthält.

5. Wässriger Beschichtungsstoff nach einem der Ansprüche 1 bis 4, **dadurch gekennzeichnet, dass** er mindestens einen Zusatzstoff (D) enthält.

6. Wässriger Beschichtungsstoff nach Anspruch 5, **dadurch gekennzeichnet, dass** der Zusatzstoff (D) aus der Gruppe, bestehend aus rückstandsfrei oder im Wesentlichen rückstandsfrei thermisch zersetzbaren Salzen; von den Polyurethanen (A) verschiedenen physikalisch, thermisch und/oder mit aktinischer Strahlung härtbaren Bindemitteln; Vernetzungsmitteln; von den organischen Lösemitteln (C) verschiedenen organischen Lösemitteln; thermisch härtbaren Reaktivverdünnern; mit aktinischer Strahlung härtbaren Reaktivverdünnern; farb- und/oder effektgebenden Pigmenten; transparenten Pigmenten; Füllstoffen; molekulardispers löslichen Farbstoffen; Nanopartikeln; Lichtschutzmitteln; Antioxidantien; - Entlüftungsmitteln; Emulgatoren; Slipadditiven; Polymerisationsinhibitoren; Initiatoren der radikalischen Polymerisation; thermolabilen radikalischen Initiatoren; Haftvermittlern; Verlaufmitteln; filmbildenden Hilfsmitteln; Rheologiehilfsmitteln; Korrosionsinhibitoren; Rieselhilfen; Wachsen; Sikkativen; Bioziden und Mattierungsmitteln; ausgewählt ist.

7. Verfahren zur Herstellung des wässrigen Beschichtungsstoffs gemäß einem der Ansprüche 1 bis 6, **dadurch gekennzeichnet, dass** man
(A) mindestens ein gesättigtes, ungesättigtes und/oder mit olefinisch ungesättigten Verbindungen gepfropftes, ionisch und/oder nicht ionisch stabilisiertes Polyurethan,
(B) mindestens ein Netz- oder Dispergierungsmittel und
(C) mindestens ein organisches Lösemittel, welches Triethylenglykol ist, sowie gegebenenfalls
(D) mindestens einen Zusatzstoff
mit Wasser vermischt und die resultierende Mischung homogenisiert.

8. Verwendung des wässrigen Beschichtungsstoffs gemäß einem der Ansprüche 1 bis 6 und des nach dem Verfahren gemäß Anspruch 7 hergestellten wässrigen Beschichtungsstoffs für die Herstellung von thermoplastischen und duroplastischen Materialien.

9. Verwendung nach Anspruch 8, **dadurch gekennzeichnet, dass** die thermoplastischen und duroplastischen Materialien Beschichtungen, Klebschichten, Dichtungen, Folien und Formteile sind.

10. Verwendung nach Anspruch 8 oder 9, **dadurch gekennzeichnet, dass** die thermoplastischen und duroplastischen Materialien auf und in grundierten und ungrundierten Substraten hergestellt werden.

11. Verwendung nach einem der Ansprüche 8 bis 10, **dadurch gekennzeichnet, dass** die thermoplastischen und duroplastischen Materialien Beschichtungen sind.

12. Verwendung nach einem der Ansprüche 8 bis 11, **dadurch gekennzeichnet, dass** der wässrige Beschichtungsstoff als Wasserbasislack für die Herstellung von farb- und/oder effektgebenden Mehrschichtlackierungen verwendet wird.

13. Verwendung nach Anspruch 12, **dadurch gekennzeichnet, dass** die farb- und/oder effektgebenden Mehrschichtlackierungen nach dem Nass-in-nass-Verfahren hergestellt werden.

14. Verwendung nach einem der Ansprüche 8 bis 13, **dadurch gekennzeichnet, dass** die Substrate Automobilkarosserien sind.

## Claims

1. Aqueous coating material comprising
(A) at least one ionically and/or nonionically stabilized polyurethane which is saturated, unsaturated and/or grafted with olefinically unsaturated compounds,
(B) at least one wetting agent or dispersant, and
(C) at least one organic solvent which is triethylene glycol.

2. Aqueous coating material according to Claim 1, **characterized in that** the wetting agent or dispersant (B) is selected from the group consisting of hyperbranched polymers, polyether-modified polydimethylsiloxanes, ionic and nonionic (meth)acrylate copolymers, high molecular mass block copolymers containing groups having pigment affinity, and dialkylsulfosuccinates.

3. Aqueous coating material according to Claim 2, **characterized in that** the wetting agent or dispersant (B) is a hyperbranched polymer.

4. Aqueous coating material according to any one of Claims 1 to 3, **characterized in that** the polyurethane (A) contains alternatively
(a1) functional groups which can be converted into cations by neutralizing agents and/or quaternizing agents, and/or cationic groups, or
(a2) functional groups which can be converted into anions by neutralizing agents, and/or anionic groups, and/or
(a3) nonionic hydrophilic groups.

5. Aqueous coating material according to any one of Claims 1 to 4, **characterized in that** it comprises at least one additive (D).

6. Aqueous coating material according to Claim 5, **characterized in that** the additive (D is selected from the group consisting of salts which can be decomposed thermally without residue or substantially without residue; binders curable physically, thermally and/or with actinic radiation that are different from the polyurethanes (A); crosslinking agents; organic solvents other than the organic solvents (C); thermally curable reactive diluents; reactive diluents curable with actinic radiation; color and/or effect pigments; transparent pigments; fillers; molecularly dispersely soluble dyes; nanoparticles; light stabilizers; antioxidants; devolatilizers; emulsifiers; slip additives; polymerization inhibitors; free-radical polymerization initiators; thermolabile free-radical initiators; adhesion promoters; flow control agents; film-forming assistants, rheology assistants; corrosion inhibitors; free-flow aids; waxes; siccatives; biocides; and matting agents.

7. Process for preparing the aqueous coating material according to any one of Claims 1 to 6, **characterized in that**
(A) at least one ionically and/or nonionically stabilized polyurethane which is saturated, unsaturated and/or grafted with olefinically unsaturated compounds,
(B) at least one wetting agent or dispersant, and
(C) at least one organic solvent which is triethylene glycol, and where appropriate
(D) at least one additive
are mixed with water and the resulting mixture is homogenized.

8. Use of the aqueous coating material according to any one of Claims 1 to 6 and of the aqueous coating material prepared by the process according to Claim 7 for producing thermoplastic and thermoset materials.

9. Use according to Claim 8, **characterized in that** the thermoplastic and thermoset materials are coatings, adhesive layers, seals, sheets and moldings.

10. Use according to Claim 8 or 9, **characterized in that** the thermoplastic and thermoset materials are produced on or in primed and unprimed substrates.

11. Use according to any one of Claims 8 to 10, **characterized in that** the thermoplastic and thermoset materials are coatings.

12. Use according to any one of Claims 8 to 11, **characterized in that** the aqueous coating material is used as an aqueous basecoat material for producing multicoat color and/or effect paint systems.

13. Use according to Claim 12, **characterized in that** the multicoat color and/or effect paint systems are produced by the wet-on-wet method.

14. Use according to any one of Claims 8 to 13, **characterized in that** the substrates are automobile bodies.

## Revendications

1. Matière de revêtement à l'eau, contenant
(A) au moins un polyuréthane saturé, insaturé et/ou greffé avec des composés à insaturation oléfinique, stabilisé par voie ionique et/ou non ionique,
(B) au moins un agent mouillant ou dispersant et
(C) au moins un solvant organique, qui est le triéthylèneglycol.

2. Matière de revêtement à l'eau selon la revendication 1, **caractérisée en ce que** l'agent mouillant ou dispersant (B) est choisi dans le groupe constitué par des polymères hyper-ramifiés, des polydiméthylsiloxanes modifiés avec des polyéthers, des copolymérisats de (méth)acrylate ioniques et non ioniques, des copolymérisats séquencés de masse moléculaire élevée comportant des groupes à affinité pour les pigments, et des sulfosuccinates de dialkyle.

3. Matière de revêtement à l'eau selon la revendication 2, **caractérisée en ce que** l'agent mouillant ou dispersant (B) est un polymère hyper-ramifié.

4. Matière de revêtement à l'eau selon l'une quelconque des revendications 1 à 3, **caractérisée en ce que** le polyuréthane (A) contient soit
(a1) des groupes fonctionnels qui peuvent être convertis en cations par des agents de neutralisation et/ou des agents de quaternisation, et/ou des groupes cationiques, soit
(a2) des groupes fonctionnels qui peuvent être convertis en anions par des agents de neutralisation, et/ou des groupes anioniques et/ou
(a3) des groupes hydrophiles non ioniques.

5. Matière de revêtement à l'eau selon l'une quelconque des revendications 1 à 4, **caractérisée en ce qu'**elle contient au moins un additif (D).

6. Matière de revêtement à l'eau selon la revendication 5, **caractérisée en ce que** l'additif (D) est choisi dans le groupe consistant en des sels décomposables thermiquement sans résidu ou pratiquement sans résidu ; des liants durcissables physiquement, thermiquement et/ou par un rayonnement actinique, différents des polyuréthanes (A) ; des agents de réticulation ; des solvants organiques différents des solvants organiques (C) ; des diluants réactifs durcissables thermiquement ; des diluants réactifs durcissables par un rayonnement actinique ; des pigments colorants et/ou à effet ; des pigments transparents ; des charges ; des colorants solubles en dispersion moléculaire ; des nanoparticules ; des photoprotecteurs ; des antioxydants ; des agents de désaération ; des émulsifiants ; des additifs de glissement ; des inhibiteurs de polymérisation ; des amorceurs de la polymérisation radicalaire ; des amorceurs radicalaires thermolabiles ; des agents d'adhérence ; des agents d'étalement ; des adjuvants filmogènes ; des adjuvants de rhéologie ; des agents anticorrosion ; des antiagglomérants ; des cires ; des siccatifs ; des biocides et des agents de matité.

7. Procédé pour la préparation de la matière de revêtement à l'eau selon l'une quelconque des revendications 1 à 6, **caractérisé en ce qu'**on mélange avec de l'eau
(A) au moins un polyuréthane saturé, insaturé et/ou greffé avec des composés à insaturation oléfinique, stabilisé par voie ionique et/ou non ionique,
(B) au moins un agent mouillant ou dispersant et
(C) au moins un solvant organique, qui est le triéthylèneglycol,
ainsi qu'éventuellement
(D) au moins un additif
et on homogénéise le mélange résultant.

8. Utilisation de la matière de revêtement à l'eau selon l'une quelconque des revendications 1 à 6 et de la matière de revêtement à l'eau préparée selon la revendication 7, pour la production de matériaux thermoplastiques et thermodurcissables.

9. Utilisation selon la revendication 8, **caractérisée en ce que** les matériaux thermoplastiques et thermodurcissables sont des revêtements, des couches de colle, des matières d'étanchéité, des films et des pièces moulées.

10. Utilisation selon la revendication 8 ou 9, **caractérisée en ce que** les matériaux thermoplastiques ou thermodurcissables sont produits sur et dans des subjectiles munis d'un primaire et des subjectiles non munis d'un primaire.

11. Utilisation selon l'une quelconque des revendications 8 à 10, **caractérisée en ce que** les matériaux thermoplastiques et thermodurcissables sont des revêtements.

12. Utilisation selon l'une quelconque des revendications 8 à 11, **caractérisée en ce que** la matière de revêtement à l'eau est utilisée en tant que peinture de fond à l'eau pour la production de revêtements de peinture multicouches colorants et/ou à effet.

13. Utilisation selon la revendication 12, **caractérisée en ce que** les revêtements de peinture multicouche colorants et/ou à effet sont produits selon le procédé humide-sur-humide.

14. Utilisation selon l'une quelconque des revendications 8 à 13, **caractérisée en ce que** les subjectiles sont des carrosseries d'automobiles.
